# EUROPEAN PATENT APPLICATION

(11) **EP 4 293 515 A1**
(43) Date of publication of application: **20.12.2023**
(21) Application number: 23163612.7
(22) Date of filing: 23.03.2023
(51) Int. Cl.: G06F 11/00, G06F 40/174, G06Q 10/10

(54) **INFORMATION PROCESSING APPARATUS, PROGRAM, AND INFORMATION PROCESSING METHOD**

(30) Priority: 14.06.2022 JP 2022095632
(71) Applicant: FUJIFILM Business Innovation Corp., Minato-ku Tokyo (JP)
(72) Inventor: MIHARA, Makoto, Yokohama-shi, Kanagawa (JP)
(74) Representative: Kurig, Thomas

(57) **Abstract**

An information processing apparatus includes a processor configured to: display on the same screen a first region displaying a workflow of processes and a second region displaying setting contents in each process forming the workflow; if an error is included in the setting contents of one of the processes, display specific information on the process displayed in the first region and having the setting contents including the error, in a manner such that the specific information is associated with an error symbol indicating an inclusion of the error; and if the error symbol is selected by a user, display at a specific location of the second region a setting field of the setting contents including the error in the process corresponding to the selected error symbol.

## Description

### Background

### (i) Technical Field

The present disclosure relates to an information processing apparatus, a program, and an information processing method.

### (ii) Related Art

Workflow systems that perform progress management in accordance with a digital workflow of business procedures including multiple processes are currently available. In such a workflow system, a business process and progress of the business process are visualized. A variety of techniques to make the digital workflow are disclosed.

Japanese Unexamined Patent Application Publication No. 2021-157400 discloses a system that helps recognize easily an entire picture of a flow using a region that allows the entire flow to be represented by icons and a region that allows detailed setting of each job to be displayed. Also, according to Japanese Unexamined Patent Application Publication No. 2021-157400, if there is a defect in the detailed settings of each job, an icon of the job with the defect is displayed in association with an error mark.

A process forming a workflow typically includes multiple items that are to be set. If an error is included in the setting contents of any process, related art techniques have difficulty in, without switching one screen to another, displaying on the same screen the process including a defect together with a setting field of setting contents including the error in the process.

### Summary

Accordingly, it is an object of the present disclosure to provide a user interface that may identify without switching screens a setting field of setting contents including an error if the setting contents in a workflow and each process forming the workflow displayed on the same screen include the error.

According to a first aspect of the present disclosure, there is provided an information processing apparatus including a processor configured to: display on the same screen a first region displaying a workflow of processes and a second region displaying setting contents in each process forming the workflow; if an error is included in the setting contents of one of the processes, display specific information on the process displayed in the first region and having the setting contents including the error, in a manner such that the specific information is associated with an error symbol indicating an inclusion of the error; and if the error symbol is selected by a user, display at a specific location of the second region a setting field of the setting contents including the error in the process corresponding to the selected error symbol.

In the information processing apparatus according to a second aspect of the present disclosure, the processor may be configured to, if the process having the setting contents including the error includes a plurality of sub-processes and the specific information on the process displayed in the first region and having the setting contents including the error is selected by the user, display, in the first region, specific information on each sub-process forming the process corresponding to the selected specific information and display specific information on a sub-process having setting contents including the error, in a manner such that the specific information on the sub-process having setting contents including the error is associated with the error symbol.

In the information processing apparatus according to a third aspect of the present disclosure, the processor may be configured to display contents of the error if the error symbol corresponding to the sub-process having the setting contents including the error is moused over by the user.

In the information processing apparatus according to a fourth aspect of the present disclosure, the processor may be configured to, if the error symbol corresponding to the sub-process having setting contents including the error is selected by the user, display, at a specific location of the second region, a setting field of the setting contents including the error in the sub-process corresponding to the selected error symbol.

In the information processing apparatus according to a fifth aspect of the present disclosure, the processor may be configured to display the error symbol at and in association with a setting field of the setting contents including the error and displayed in the second region.

In the information processing apparatus according to a sixth aspect of the present disclosure, the processor may be configured to display the error symbol in a manner such that the number of setting contents including the error in the process having setting contents including the error is clarified.

In the information processing apparatus according to a seventh aspect of the present disclosure, the error symbol may represent, by using a numeral, the number of setting contents including the error in the process.

In the information processing apparatus according to an eighth aspect of the present disclosure, the processor may be configured to display the error symbols by the number of setting contents including the errors in the process in a manner such that the error symbols are associated with the specific information on the process.

In the information processing apparatus according to a ninth aspect of the present disclosure, the processor may be configured to, if one of the error symbols is selected by the user, display, at a specific location of the second region, a setting field of the setting contents corresponding to the selected error symbol.

In the information processing apparatus according to a tenth aspect of the present disclosure, the processor may be configured to, if the error symbol is displayed at and in association with the setting field of the setting contents including the error and displayed in the second region, perform control to display the error symbol in a superior-subordinate relationship if the setting contents are in the superior-subordinate relationship.

In the information processing apparatus according to an eleventh aspect of the present disclosure, the processor may be configured to perform control such that the error symbol is not displayed at a setting field of the setting contents that are subordinate.

In the information processing apparatus according to a twelfth aspect of the present disclosure, the processor may be configured to, if the error symbol displayed at and in association with a setting field of the setting contents that are subordinate is selected by the user, display, at a specific location of the second region, a setting field of the setting contents that are superior and correspond to the subordinate setting contents.

According to a thirteenth aspect of the present disclosure, there is provided a program including: displaying on the same screen a first region displaying a workflow of processes and a second region displaying setting contents in each process forming the workflow; with an error included in the setting contents of one of the processes, displaying specific information on the process displayed in the first region and having the setting contents including the error, in a manner such that the specific information is associated with an error symbol indicating an inclusion of the error; and with the error symbol selected by a user, displaying at a specific location of the second region a setting field of the setting contents including the error in the process corresponding to the selected error symbol.

According to a fourteenth aspect of the present disclosure, there is provided an information processing method including: displaying on a same screen a first region displaying a workflow of processes and a second region displaying setting contents in each process forming the workflow; with an error included in the setting contents of one of the processes, displaying specific information on the process displayed in the first region and having the setting contents including the error, in a manner such that the specific information is associated with an error symbol indicating an inclusion of the error; and with the error symbol selected by a user, displaying at a specific location of the second region a setting field of the setting contents including the error in the process corresponding to the selected error symbol.

According to the first aspect of the present disclosure, if the processes of the whole workflow and the setting contents forming each process of the workflow are displayed on the same screen with an error included in one of the setting contents, a user interface that identifies the setting field of the setting contents including the error may be provided without switching screens.

According to the second aspect of the present disclosure, a sub-process including an error out of sub-processes forming the process that has the setting contents including the error may be notified to the user.

According to the third aspect of the present disclosure, the contents of the error may be notified to the user.

According to the fourth aspect of the present disclosure, the setting field of the setting contents including the error may be notified to the user.

According to the fifth aspect of the present disclosure, even when there are multiple setting contents including errors and the setting field of the setting contents including the error is difficult to display at the specific location, the setting field of the setting contents including the errors may be notified to the user.

According to the sixth aspect of the present disclosure, the number of setting contents including the errors in the process may be notified to the user.

According to the seven aspect of the present disclosure, the number of setting contents including errors may be clearly notified to the user.

According to the eight aspect of the present disclosure, the error symbol is may be associated with the setting field having the error.

According to the ninth aspect of the present disclosure, the setting contents including the error that is to be displayed in the second region may be selected by the user.

According to the tenth aspect of the present disclosure, if the setting contents including the errors are in the superior-subordinate relationship, the display of the error symbol may be controlled in accordance with the superior-subordinate relationship.

According to the eleventh aspect of the present disclosure, if the clearance of the error in the setting contents that are superior removes the error in the setting contents that are subordinate, the user may intentionally not be informed of the setting field of the setting contents that are subordinate.

According to the twelfth aspect of the present disclosure, the setting field of the setting contents that are superior may be notified to the user.

According to the thirteenth or fourteenth aspect of the present disclosure, if the processes of the whole workflow and the setting contents forming each process of the workflow are displayed on the same screen with an error included in one of the setting contents, a user interface that identifies the setting field of the setting contents including the error may be provided without switching screens.

### Brief Description of the Drawings

Exemplary embodiment of the present disclosure will be described in detail based on the following figures, wherein:
Fig. 1 is a block diagram illustrating a workflow system of an exemplary embodiment;
Fig. 2 illustrates an example of a screen displayed on an information terminal of the exemplary embodiment;
Fig. 3 illustrates an example of a screen display when a process name displayed in a first region of the exemplary embodiment is selected;
Fig. 4 illustrates an example of the screen display when a sub-process name displayed in the first region of the exemplary embodiment is selected;
Fig. 5 illustrates an example of a screen displayed when setting contents of the exemplary embodiment includes an error;
Fig. 6 illustrates an example of the screen display when the process name displayed in the first region is selected by a user;
Fig. 7 illustrates an example of the screen display when an error mark displayed in the first region is moused over by the user;
Fig. 8 illustrates an example of the screen display when the error mark displayed in the first region is selected by the user;
Fig. 9 illustrates an example of the screen display when the error mark displayed in the first region is selected for the first time by the user in Fig. 5;
Fig. 10 illustrates an example of the screen display when the error mark displayed in the first region is selected for the second time by the user in Fig. 5;
Fig. 11 illustrates an example of the screen display of another error mark displayed in the first region in accordance with of the exemplary embodiment;
Fig. 12 illustrates an example of the display screen when the error mark displayed in the first region is selected by the user;
Fig. 13 illustrates an example of a correction display screen of the exemplary embodiment;
Fig. 14 illustrates another example of the screen displayed on the information terminal of the exemplary embodiment;
Fig. 15 illustrates another example of the screen displayed on the information terminal of the exemplary embodiment; and
Fig. 16 illustrates an example of a setting screen used to set a superior-subordinate relationship of items in accordance with the exemplary embodiment.

### Detailed Description

Embodiment of the disclosure is described with reference to the drawings.

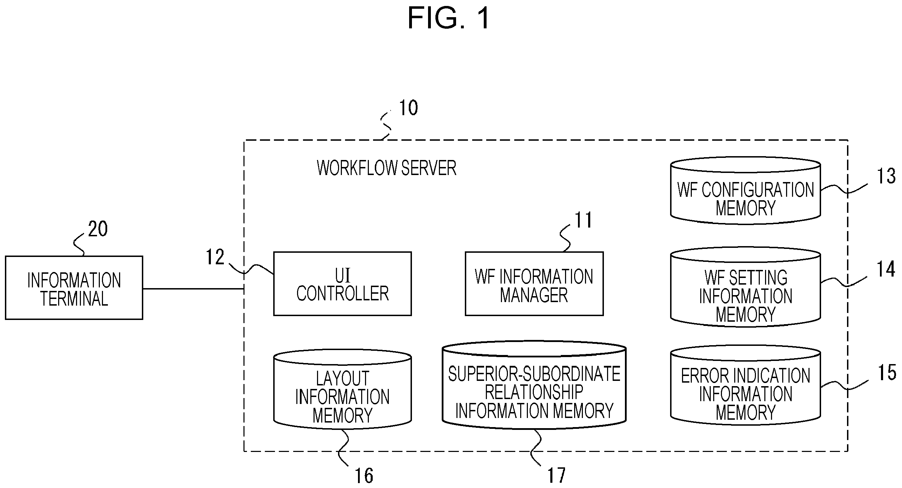

Fig. 1 is a block diagram illustrating a workflow system of the exemplary embodiment. Fig. 1 illustrates a workflow server 10 that manages a flow of a business process defined as a workflow and an information terminal 20 that is used by a user that sets the workflow in the workflow server 10. The workflow server 10 and information terminal 20 are mutually interconnected to each other for communication via a network, such as a local-area network (LAN) and/or a virtual private network (VPN).

The word "workflow" in the exemplary embodiment refers to the flow of a business process that involves multiple users. The workflow server 10 may be used by multiple users and an application used to perform a process described below is installed onto the information terminals 20 respectively used by the users. For convenience of explanation, only a single information terminal 20 is illustrated in Fig. 1.

The information terminal 20 may be implemented by a commercially available general-purpose computer, such as a personal computer (PC). The information terminal 20 includes a central processing unit (CPU), a memory including a read-only memory (ROM), random-access memory (RAM) and/or hard disk, network interface, and user interface including an input unit, such as a mouse or a keyboard, and a display.

The workflow server 10 manages an exchange process of digital documents in the workflow and the progress of the exchange process. The workflow server 10 of the exemplary embodiment is an example of an information processing apparatus of the exemplary embodiment. A single workflow server 10 is employed herein, but multiple workflow servers 10 may also be employed.

The workflow server 10 of the exemplary embodiment includes a workflow (WF) information manager 11, user interface (UI) controller 12, WF configuration memory 13, WF setting information memory 14, error indication information memory 15, layout information memory 16, and the superior-subordinate relationship information memory 17. Elements that are not described in the description of the disclosure are not illustrated in the drawings. The block diagram in Fig. 1 is illustrated for exemplary purposes only. For example, a variety of information used in the exemplary embodiment may be divided and stored.

The WF information manager 11 manages a variety of information related to the workflow, for example, sets the workflow itself, sets each item included in each process forming the workflow, and performs a true-false determination on setting contents in each item. The UI controller 12 controls information input to and output from the information terminal 20, for example, controls displaying of information related to the workflow on a display screen of the information terminal 20 and receives information input to the display screen of the information terminal 20.

The WF configuration memory 13 defines and stores information related to the whole workflow. Specifically, information on the flow of processes of the whole workflow and information on each items set in each process are registered. The WF setting information memory 14 stores the setting contents (also referred to as "item values") at setting items included in each process. The setting contents are acquired when a user enters the setting contents or when a setting region is automatically read from each item on a predetermined paper sheet. The error indication information memory 15 stores error indication information including an error message and an error symbol displayed on the information terminal 20 when the setting contents include an error. The layout information memory 16 stores layout information on a variety of screens that are used to display information related to the workflow on the information terminal 20. Structures of the variety of information to be stored on the memories 13 through 16 may be identical the structures of information in the related art. Superior-subordinate relationship information stored on the superior-subordinate relationship information memory 17 is described below together with operations of the system.

The WF information manager 11 and UI controller 12 in the workflow server 10 may be implemented by a computer forming the workflow server 10 that operates in concert with a program running on the CPU in the computer. The WF configuration memory 13 through the superior-subordinate relationship information memory 17 in the workflow server 10 may be implemented by a hard disk drive (HDD) mounted in the workflow server 10. Alternatively, the WF configuration memory 13 through the superior-subordinate relationship information memory 17 may be implemented using the RAM or an external memory connected to the workflow server 10 via a network.

The program in the exemplary embodiment may be delivered via a communication system or by storing the program on a computer-readable recording medium, such as a compact disc read only memory (CD-ROM) or universal serial bus (USB) memory. The program delivered via the communication system or the recording medium is installed onto the computer and a variety of processes are performed by the CPU in the computer that successively executes the programs.

The operation of the exemplary embodiment is described with reference to screen examples. In the following discussion, the information related to the workflow is prestored on the memories 13 through 17. The flow of the processes of the workflow and the items to be set in each process are defined correctly but item values to be set in items, specifically, setting contents may include an error. There are cases in which in each figure, the setting contents may be omitted, in other words, may not necessarily be illustrated. The exemplary embodiment has a feature in an operation performed when the setting contents includes an error or a feature in a user interface. Unless otherwise particularly noted, related art techniques may be employed in a display method of the setting contents and in the correction method of the setting contents.

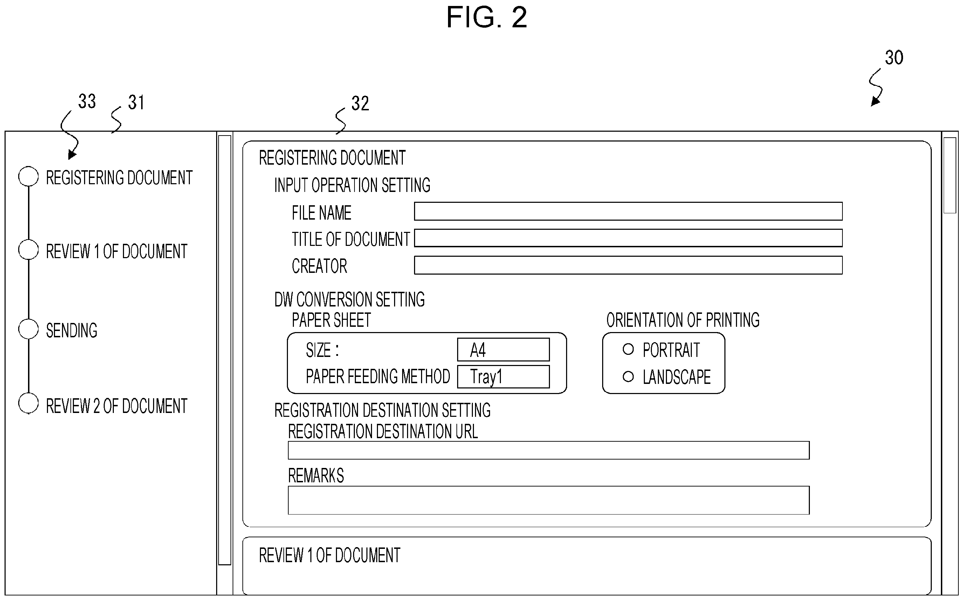

Fig. 2 illustrates an example of a display screen that is displayed on the information terminal 20 of the exemplary embodiment and used to provide a user with information related to the workflow. A screen 30 in Fig. 2 is a verification screen of the setting contents in each process forming the workflow. If an error is included in the setting contents, the screen 30 displays a setting field of the setting contents including the error and is thus a working screen on which a user performs correction. A left-hand side of the screen 30 is a first region 31 that displays the flow of the processes of the whole workflow. A right-hand side of the screen 30 is a second region 32 that displays the setting contents in each process forming the workflow. If the second region 32 is unable to accommodate all the setting contents, desired setting content may be displayable by scrolling. According to the exemplary embodiment, since the whole workflow includes on the same screen the first region 31 displaying the whole workflow and the second region 32 presenting the setting contents in each process, the user may verify, on the same screen without switching screens, the flow of the processes of the whole workflow and the setting contents in each process.

Fig. 2 illustrates a basic layout configuration of the screen 30. The first region 31 displays process names to indicate the flow of the processes such that the order of the processes forming the workflow, including "Registering document," "Review 1 of document," "Sending," and "Review 2 of document." The process names are an example of information identifying each process.

The process names in the first region 31 are displayed in a manner such that a user may select one of the process names. If the user performs a specific first selection operation, for example, a single click operation, on one of the processes displayed in the first region 31, the setting contents responsive to the process selected by the user are displayed in alignment with a specific location of the second region 32. According to the exemplary embodiment, the specific location is the top portion of the second region 32, specifically, the leading portion of the screen. The specific location is not limited to the top portion of the second region 32 and, for example, may be the center of the screen of the second region 32. Fig. 2 illustrates the state in which the leading "registering document" process 33 is selected out of the processes. The setting contents responsive to the registering document process 33 selected in response to the single click operation of the user are displayed in the top portion of the second region 32. Fig. 2 also illustrates a default screen that is displayed when an application is started up on the information terminal 20. Using a mouse, the user selects a process name displayed in the first region 31, and in the following discussion, a term displayed in the first region 31 is referred to as a "process name" or simply a "process," for convenience of explanation.

The workflow server 10 operates in connection with the displaying of the screen 30 as described below. When the user selects a process by a single click operation on the information terminal 20, the UI controller 12 receives the selection operation as an instruction. The UI controller 12 moves, to the top portion of the second region 32, a display area of the setting contents responsive to the selected process, namely, the setting contents responsive to the registering document process 33 as described above, and then displays the setting contents.

Referring to Fig. 2, when the user performs a predetermined second selection operation, such as a double click operation, on a process among the processes displayed in the first region 31, a process (hereinafter referred to as a sub-process) included in the process selected by the user is displayed in the first region 31.

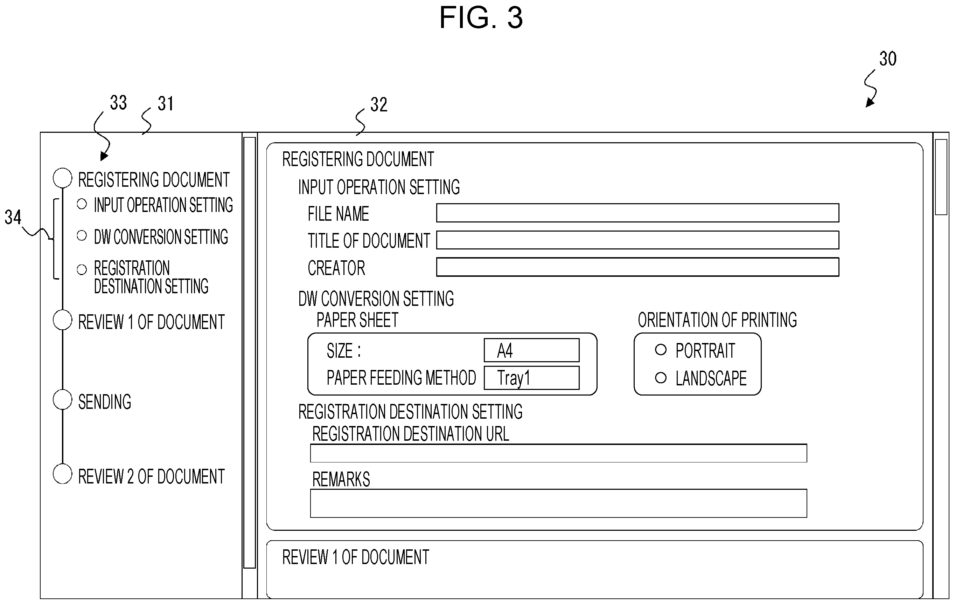

Fig. 3 illustrates a display example of the screen 30 when the registering document process 33 is selected in response to the double click operation in Fig. 2. As seen from the screen 30 in Fig. 3, the registering document process includes sub-processes 34 including an "input operation setting," "DW conversion setting," and "registration destination setting." The screen 30 thus displays sub-process names such that the flow of the processes, namely, the order of the sub-processes in the registering document process is recognized.

The workflow server 10 operates to display the sub-processes as described below. When the user selects a process by performing a double click operation on the information terminal 20, the UI controller 12 receives the selection operation as an instruction from the user. The WF information manager 11 searches the WF configuration memory 13 in response to the instruction and acquires the sub-processes forming the corresponding process, namely in the above-described example, the input operation setting sub-process, DW conversion setting sub-process, and registration destination setting sub-process forming the registering document process 33. The UI controller 12 displays in the first region 31 the sub-processes acquired by the WF information manager 11.

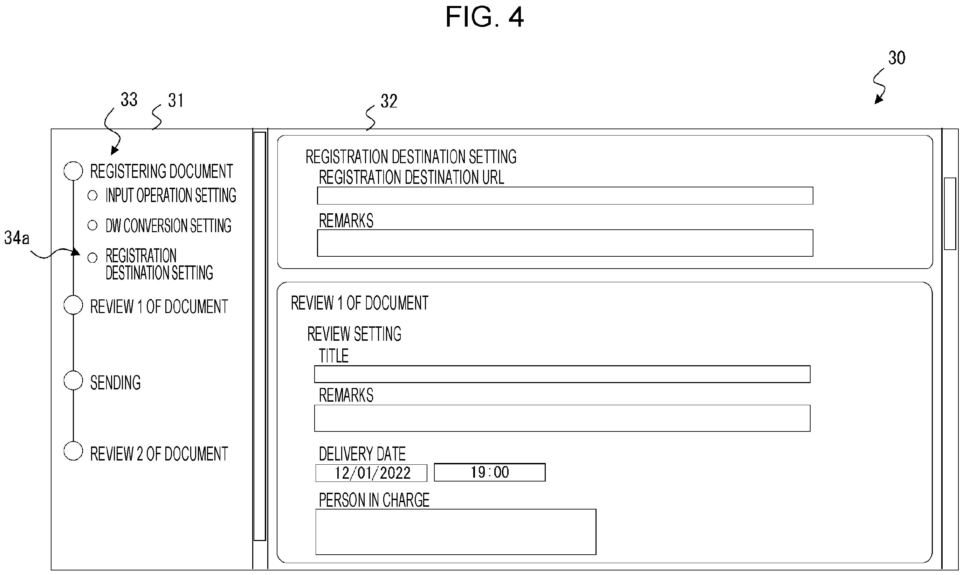

Referring to Fig. 3, when the user performs a predetermined third selection operation, for example, a single click operation on a sub-process from among the sub-processes displayed in the first region 31, the setting contents responsive to the sub-process selected by the user are displayed in alignment with the specific location in the second region 32. Fig. 4 illustrates a screen display example when a registration destination setting sub-process 34a is selected in response to the single click operation in Fig. 3. Referring to Fig. 4, the second region 32 displays in alignment with the top portion thereof the setting contents responsive to the registration destination setting sub-process 34a selected by the user from among the registering document process 33.

According to the exemplary embodiment, the setting contents responsive to the process selected in response to the selection operation of the user performed on the process displayed in the first region 31 may be moved to the specific location of the second region 32 and then displayed. The user is thus free from scrolling and searching for the setting contents displayed in the second region 32. The setting contents on the workflow server 10 have been described and the discussion thereof is omitted herein.

The screen 30 characteristic of the exemplary embodiment performed with an error included in the setting contents are displayed and processed as described below.

As previously described, the WF setting information memory 14 stores the setting contents in each item. The WF information manager 11 references a setting condition for each item, and performs a true-false determination on the setting contents, namely, item values set on the WF setting information memory 14 to detect an error. If an error is included in the setting contents, the WF information manager 11 manages the setting contents by associating information indicating the presence of the error with the setting contents. Specifically, the WF information manager 11 stores and manages an indication indicating that an item of the setting contents includes the error and the contents of the error included in the setting contents. The handling of the error of the WF information manager 11 may be based on related art technique.

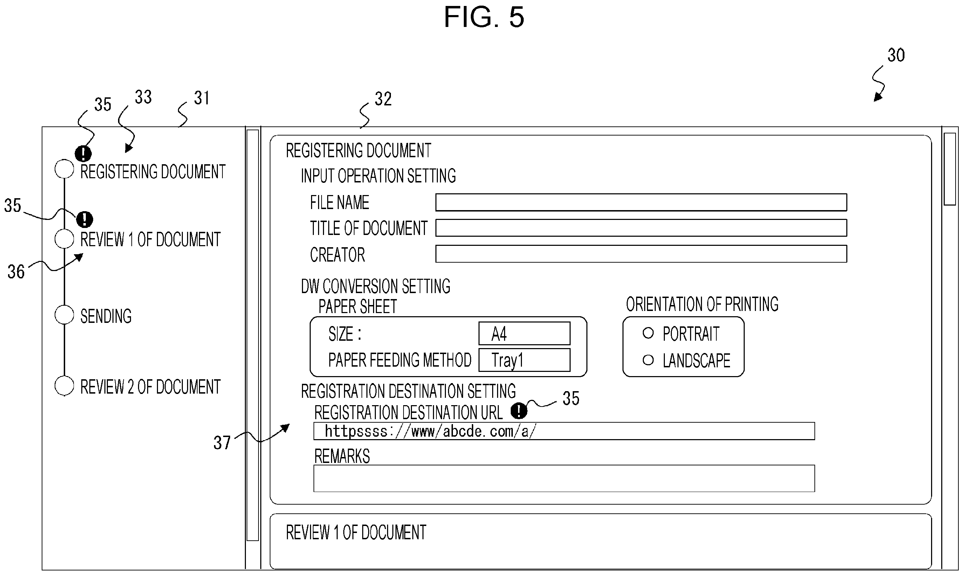

Fig. 5 illustrates a display example of the screen 30 with errors included in the setting contents in processes and corresponds to Fig. 2 where no error is included on the display example of the screen 30. Referring to Fig. 5, error marks 35 are displayed in association with the processes with the setting contents including the errors in the first region 31. The error mark 35 is an error symbol indicating that the process displayed in an associated manner includes an error. The screen 30 in Fig. 5 displays the error marks 35 respectively in close vicinity with the registering document process 33 and "review 1 of document" process 36 and thus indicates that the two processes have the setting contents respectively including the errors. With reference to the display example in the second region 32, the error mark 35 is displayed in association with a "registration destination URL" item 37 set in the registration destination setting sub-process and indicates that an error is included in the setting contents for the registration destination URL item 37 in the registering document process.

When the screen 30 is displayed, the WF information manager 11 references information related to error. If there are setting contents including an error, the UI controller 12 displays the error mark 35 in association with the process and sub-process identified by the WF information manager 11. Technically, the UI controller 12 displays the screen 30 on the information terminal 20 by sending information used to display a web page, such as the screen 30, in response to a request from the information terminal 20 to the information terminal 20. In the following discussion, this operation is simply referred as follows: the UI controller 12 displays the screen 30.

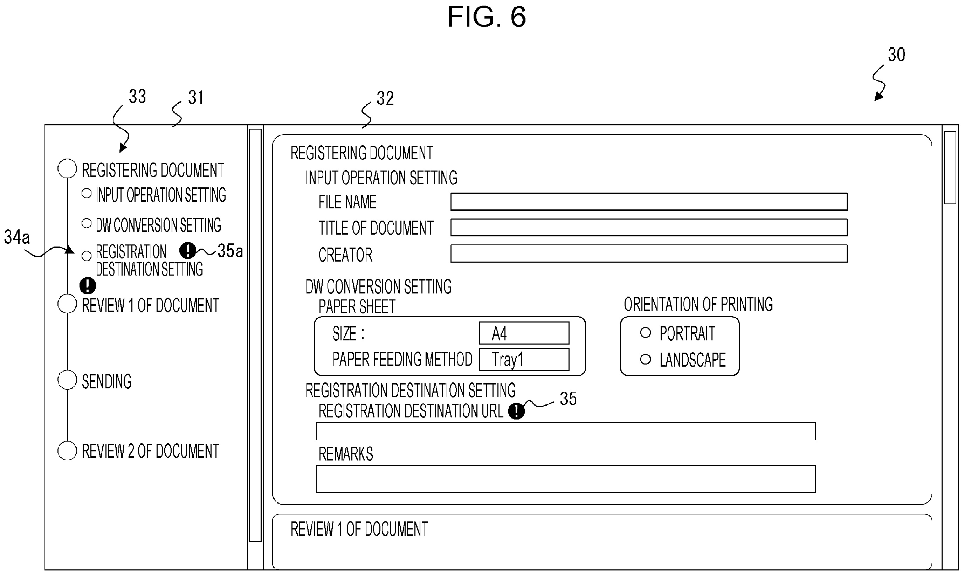

Fig. 6 illustrates a display example of the screen 30 when the registering document process 33 in Fig. 5 is selected in response to a fourth selection operation of the user, for example, a double click operation. As illustrated in Fig. 6, the UI controller 12 deletes the error mark 35 associated with the registering document process 33 and displays an error mark 35a in association with the registration destination setting sub-process 34a. This may signify that a process of attaching the error mark 35 is shifted from the overall flow of the processes to a sub-process in a detailed flow in the first region 31.

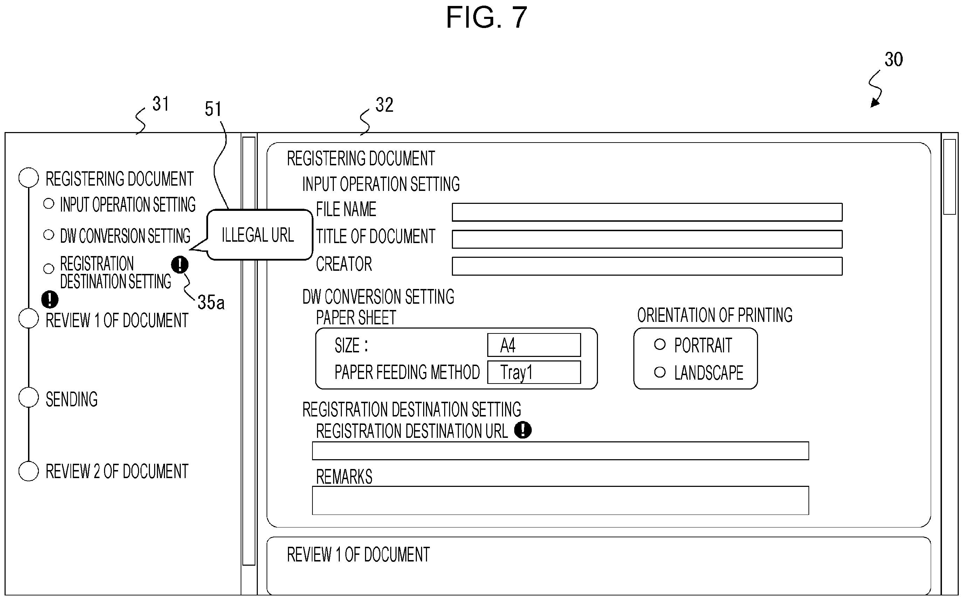

Fig. 7 illustrates a display example of the screen 30 when the error mark 35a corresponding to the registration destination setting sub-process 34a in Fig. 6 is moused over by the user. If an error is included in the setting contents, the WF information manager 11 receives from the error indication information memory 15 an error message indicative of the contents of the error. When the error mark 35a is moused over by the user, the UI controller 12 displays the error message acquired by the WF information manager 11 in a popup 51 associated with the error mark 35a on the screen 30.

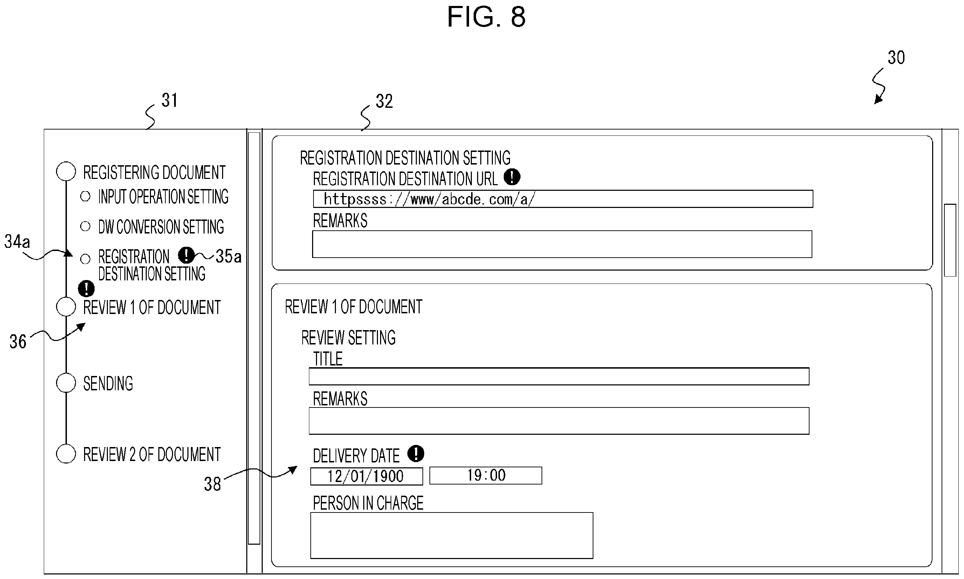

Fig. 8 illustrates a display example of the screen 30 when the error mark 35a corresponding to the registration destination setting sub-process 34a in Fig. 6 is selected in response to a predetermined fifth operation of the user, for example, a single click operation. When the error mark 35a is selected in response to the single click operation of the user, the UI controller 12 scrolls a display area in the second region 32 as illustrated in Fig. 8 and thus displays a setting field of the setting contents, corresponding to the selected registration destination setting sub-process 34a, in alignment with a specific location in the second region 32, for example, the top portion of the second region 32 in the exemplary embodiment. The display example of the second region 32 with the display area scrolled reveals that the setting contents in a "delivery date" item 38 in the review 1 of document process 36 include an error. By displaying the error mark 35 in association with an item with the setting contents including the error in the second region 32, the user may recognize the item including the error without the setting contents being displayed at the specific location in the second region 32.

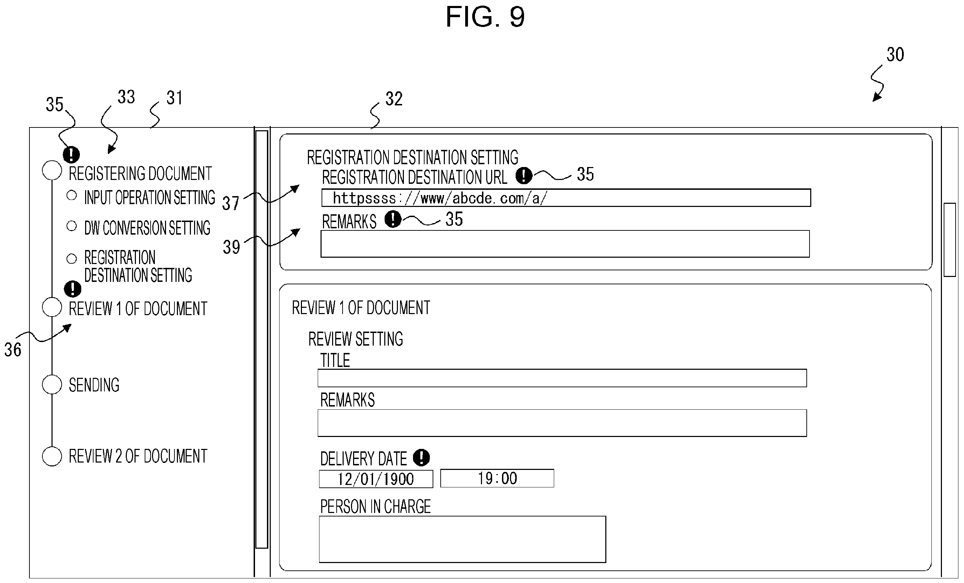

As Fig. 8, Fig. 9 illustrates a display example of the screen 30 when the setting contents in the registering document process 33 and the review 1 of document process 36 include errors. However, in Fig. 9, as in Fig. 5, the error mark 35 is displayed in association with the registering document process 33. Fig. 9 is thus different from Fig. 8 in this point. Since with reference to the second region 32, the error marks 35 are displayed in association with two setting items in the registration destination setting sub-process, namely, a registration destination URL item 37 and remarks item 39, it is recognized that errors are in the setting contents of the two items. In this case, if a predetermined sixth selection operation, such as a single click operation, is performed on the error mark 35 corresponding to the registering document process 33, the setting field of the setting contents in the registration destination URL item 37 located in the top portion, out of the setting contents including the errors in the registering document process 33, is displayed in alignment with the specific location of the second region 32, namely, the top portion of the second region 32. With the error mark 35 corresponding to the registering document process 33 operated once, the setting field of the registration destination URL item 37 is displayed in the top portion of the second region 32 in Fig. 9.

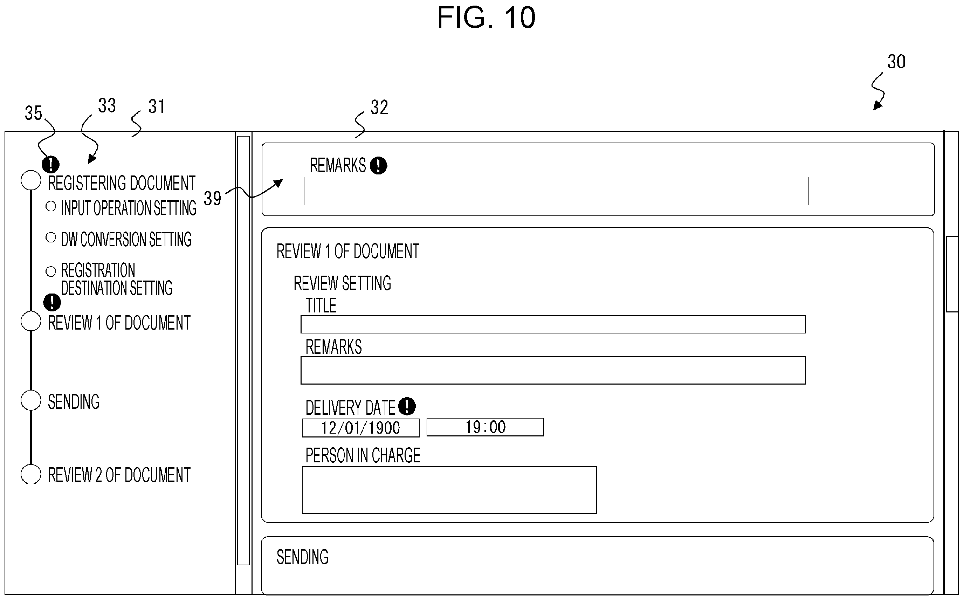

In succession, a second single click operation may be performed on the error mark 35 corresponding to the registering document process 33. The setting contents in a second item out of the setting contents including the errors in the registering document process 33, specifically, the setting field of the remarks item 39 is displayed in the top portion of the second region 32. In this way, the display area in the second region 32 is scrolled such that the setting field of the remarks item 39 as the second item is displayed in the top portion of the second region 32. Fig. 10 illustrates a thus obtained display example of the screen 30.

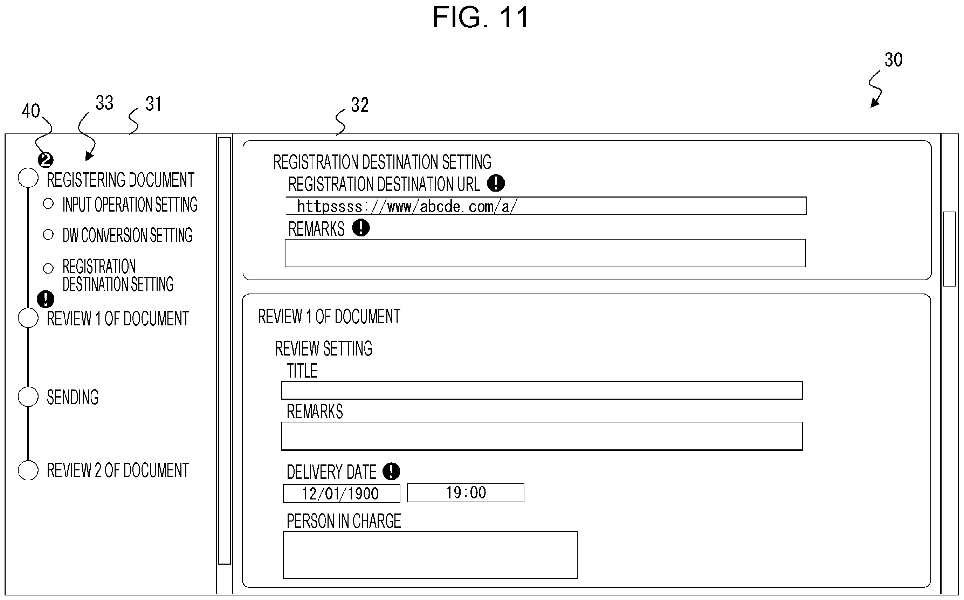

Fig. 11 illustrates a modification of the display of the error mark and corresponds to the display example of the screen 30 illustrated in Fig. 9. As described above, the same error marks 35 are respectively displayed in association with processes and sub-processes with the setting contents including errors. For example, even when there is an item with the setting contents including multiple errors, the same error marks 35 are used regardless of the number of setting contents. Fig. 11 illustrates a display example of the error symbols that causes the number of setting contents including errors in a process to be recognized. For example, if the number of setting contents including errors in the registering document process 33 is 2, an error mark 40 indicating the number 2 is used. Referring to Fig. 9, the number of setting contents including errors in the registering document process 33 may be recognized by referencing the second region 32 but the reference of the first region 31 alone does not allow the user to recognize the number of setting contents. In contrast, in the display example of the screen 30 in Fig. 11, the reference of the first region 31 helps the user clearly recognize as being 2 the number of setting contents having errors in the registering document process 33.

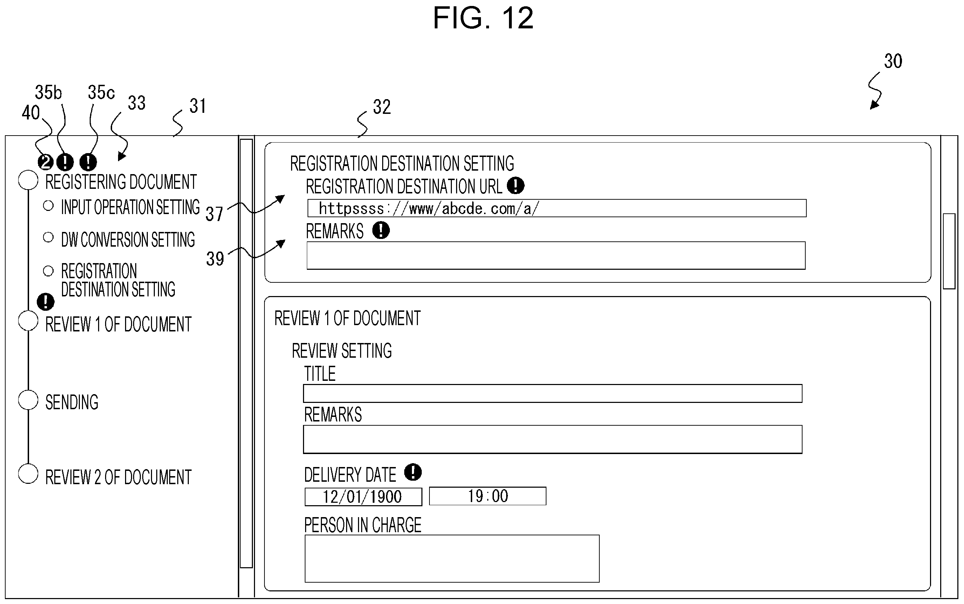

When the error mark 40 indicative of a number is selected in Fig. 11, the setting field of the setting contents including errors in the second region 32 may be displayed in the top portion of the second region 32 as illustrated in Fig. 9. Alternatively, a display example different from Fig. 9 may also be used. Such a modification is illustrated in Fig. 12.

If the error mark 40 indicative of a number is selected in Fig. 11, the UI controller 12 displays error marks 35b and 35c of exclamation marks "!" corresponding to the number of setting contents including errors in association with the registering document process 33 as illustrated in Fig. 12. Referring to Fig. 12, the error marks 35b and 35c are horizontally arranged side by side together with the error mark 40 indicating the number. The error marks 35b and 35c displayed herein are associated with the setting field of the setting contents including the errors displayed in the second region 32. If one of the error marks 35b and 35c is selected by the user, the UI controller 12 displays at the specific location in the second region 32 the setting field of the setting contents corresponding to the selected one of the error marks 35b and 35c. For example, if the error mark 35b is selected by the user, the setting field of the setting contents associated with the error mark 35b, specifically, the registration destination URL item 37 is displayed in the top portion of the second region 32 as illustrated in Figs. 9 and 12. If the error mark 35c is selected by the user, the setting field of the setting contents associated with the error mark 35c, specifically, the remarks item 39 is displayed in the top portion of the second region 32 as illustrated in Fig. 10.

As previously described, since the setting field of the setting contents including errors is displayed at the specific location in the second region 32, namely, in the top portion of the second region 32 in the exemplary embodiment, the setting contents including the errors may be corrected in the top portion of the second region 32. Since the correction is to be performed, the setting contents including the errors may be collectively displayed on the screen.

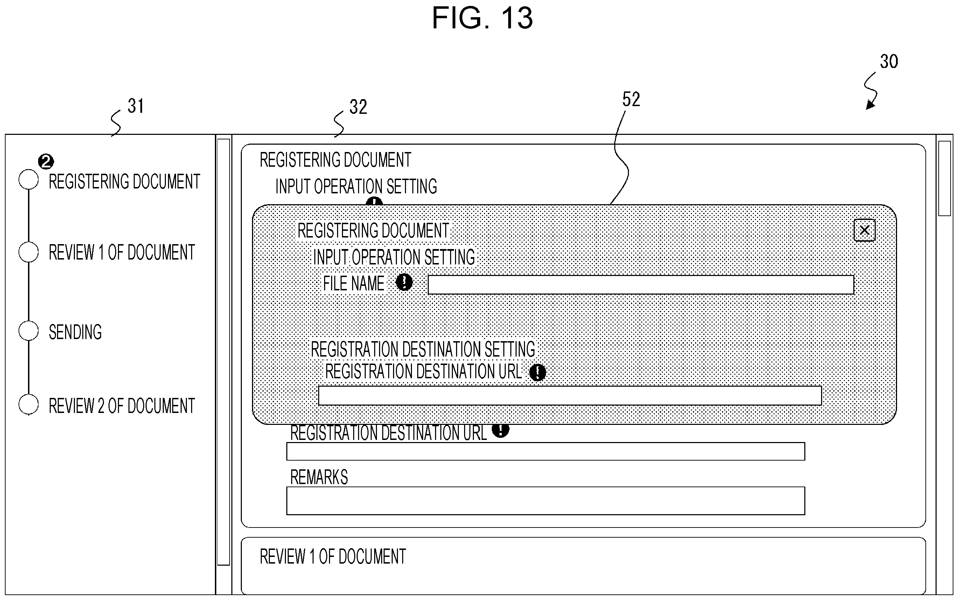

Fig. 13 illustrates a screen display example of the screen 30 with a correction screen 52 superimposed thereon. The setting contents including errors in each process are extracted and displayed on the correction screen 52. Using the correction screen 52, the user may easily recognize the setting contents serving as a correction target in a manner free from selecting the error mark 35 and displaying the setting contents including the errors in the top portion of the second region 32.

The manner of displaying the error mark 35 with the setting items in the superior-subordinate relationship is described below. For convenience of explanation, a superior item and a subordinate item are on a one-to-one correspondence basis unless otherwise noted.

The superior-subordinate relationship in the exemplary embodiment signifies that if the setting contents of one item are determined, the setting contents of the other item are automatically determined. The same value is not necessarily set to each item. In the following discussion, one item serving as being superior is referred to as a superior item and the other item serving as being subordinate is referred to as a subordinate item. If the setting contents of the superior item include an error, the setting contents of the subordinate item also include an error. If the error in the superior item is removed, the error in the subordinate item is automatically removed.

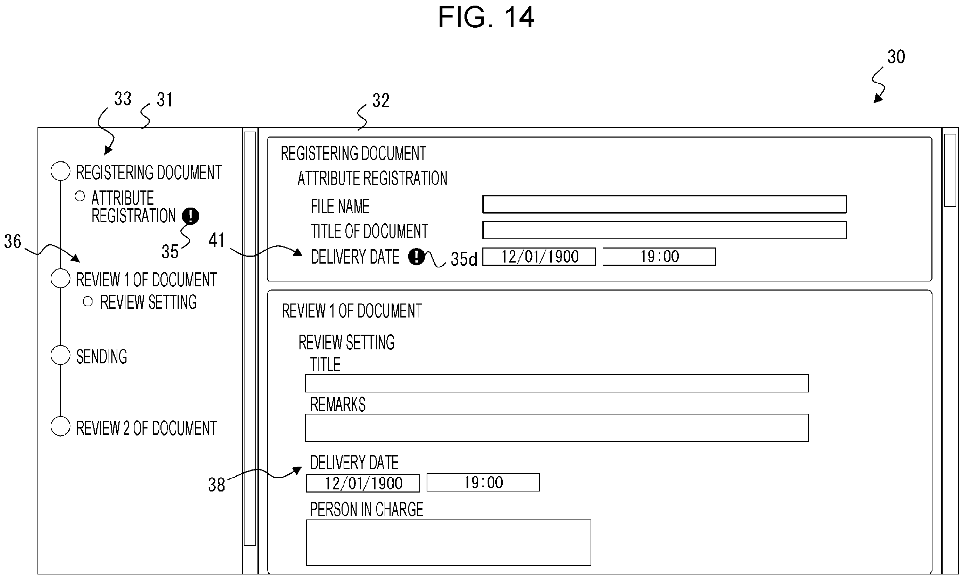

Fig. 14 illustrates an example of the screen 30 that is displayed on the information terminal 20. For convenience of explanation, the configuration of the sub-process is slightly modified on the screen example used in the previous discussion. Referring to Fig. 14, a delivery date item 41 in an attribute registration sub-process included in the registering document process 33 and the delivery date item 38 in a review setting sub-process included in the review 1 of document process 36 are in the superior-subordinate relationship and the delivery date item 41 is a superior item and the delivery date item 38 is a subordinate item. Specifically, if an item value (the setting contents) is set in the delivery date item 41, the item value is automatically set in the delivery date item 38.

The UI controller 12 may display the error symbol in association with the setting field of the setting contents including the error described above. If there is an item in the superior-subordinate relationship, the UI controller 12 controls the displaying of the error symbol in association with the superior-subordinate relationship as described below. For example, the delivery date items 41 and 38 may be in the superior-subordinate relationship and include errors. If the user corrects the setting contents of the delivery date item 41 serving as a superior item, the correction may be automatically reflected in the setting contents of the delivery date item 38 serving as a subordinate item such that the error in the delivery date item 38 is automatically corrected. Specifically, the error in the delivery date item 38 may be removed without the user taking any action on the delivery date item 38 serving as the subordinate item. As illustrated in Fig. 14, the UI controller 12 displays an error mark 35d in association with the delivery date item 41 such that the user is notified of the delivery date item 41 that is to be corrected. On the other hand, the UI controller 12 does not display an error mark in association with the delivery date item 38 because the user is free from directly correcting the delivery date item 38.

The user may possibly want to recognize that the setting contents of the subordinate item includes an error and that the correction of the error in the superior item removes an error included in the setting contents of the subordinate item. An arrangement may be made to let the user recognize this operation.

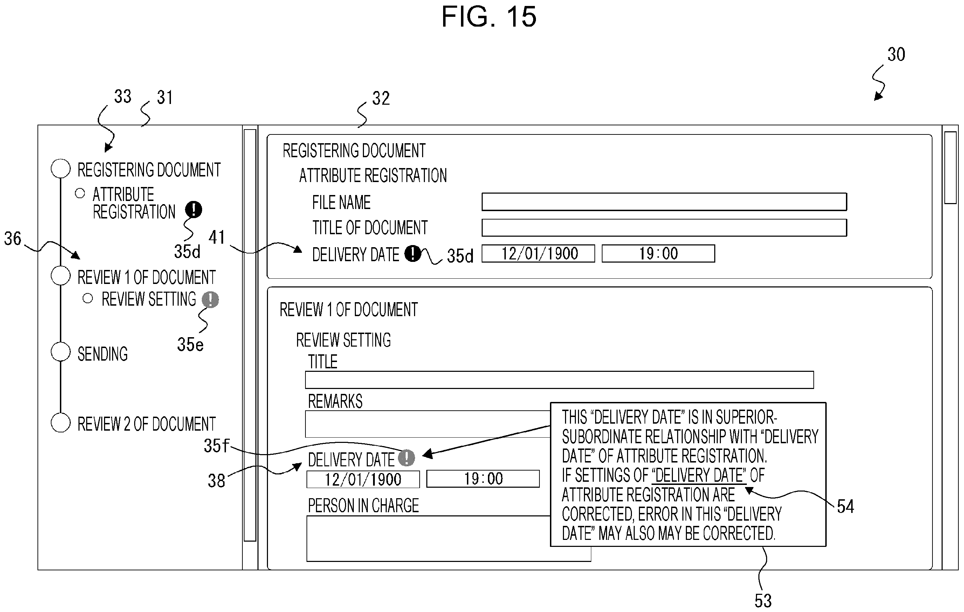

As Fig. 14, Fig. 15 illustrates an example of the screen 30 displayed on the information terminal 20. In the same way as in Fig. 14, the delivery date item 41 in the attribute registration sub-process included in the registering document process 33 and the delivery date item 38 in the review setting sub-process included in the review 1 of document process 36 are in the superior-subordinate relationship and the delivery date item 41 is the superior item and the delivery date item 38 is the subordinate item.

Referring to Fig. 15, the UI controller 12 displays an error mark 35e in a display form different from the error mark 35d displayed in association with the superior item, specifically, displays the error mark 35e, dedicated for the subordinate item, in association with the review 1 of document process 36 including the subordinate item having the error. The UI controller 12 also displays an error mark 35f, dedicated for the subordinate item in the same way as the error mark 35e, in association with the delivery date item 38. When the user performs a predetermined seventh operation, such as a right click operation, on the error mark 35f displayed in association with the delivery date item 38, the UI controller 12 displays in a popup 53 a message in association with information acquired from the WF information manager 11. The message indicates that the superior item is present and that the error included in the setting contents in the subordinate item may be removed by removing the error in the superior item. A link 54 may be set to the superior item including the message. If the user selects the link, the setting field of the superior item is displayed in the top portion of the second region 32. In this way, if the error mark 35f displayed in association with the delivery date item 38 is selected, the UI controller 12 displays the setting field of the delivery date item 41 in the top portion of the second region 32.

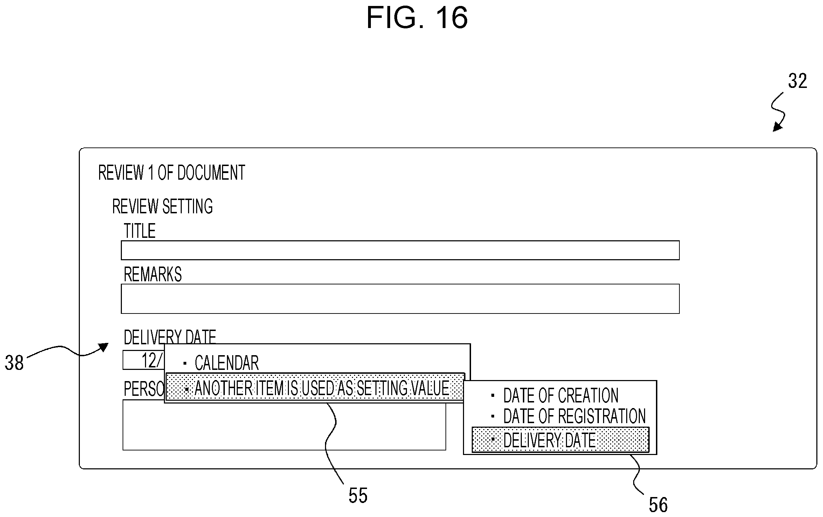

Fig. 16 illustrates a screen example used to set the superior-subordinate relationship between the items. For example, referring to Fig. 16, if the user performs a predetermined operation, such as a right click operation, on the delivery date item 38 serving as the subordinate item, the UI controller 12 displays a popup 55 that lists an item that identifies an acquisition destination of information according to which the superior item is associated with the delivery date item 38. When the user selects an item, a choice matching the selected item is displayed in a popup 56. In this way, the user associates the superior item and the subordinate item by selecting desired items from an item list displayed in the popups 55 and 56. Information about the superior-subordinate relationship related to items associated as the superior item and the subordinate item may be specified by the user. The information may include items, sub-processes including the items, and item values indicating whether each item is a superior item or a subordinate item. In response, the WF information manager 11 registers in the superior-subordinate relationship information memory 17 the superior-subordinate relationship including the item values acquired via the UI controller 12.

As described above, the superior-subordinate relationship is based on a one-to-one correspondence basis. Alternatively, a one-to-multiple relationship or a multiple-to-one relationship may also be possible. In the one-to-multiple relationship, if a date of registration is set as the superior item, item values for multiple subordinate items, namely, the delivery of the review 1 of document and the delivery of the review 2 of document, may be automatically set. In the multiple-to-one relationship, if item values for multiple superior items, such as the date of registration of document and period, are set, the delivery of review 1 of document (date of registration of document and period) may be automatically set as the subordinate item.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
display on a same screen a first region displaying a workflow of processes and a second region displaying setting contents in each process forming the workflow;
if an error is included in the setting contents of one of the processes, display specific information on the process displayed in the first region and having the setting contents including the error, in a manner such that the specific information is associated with an error symbol indicating an inclusion of the error; and
if the error symbol is selected by a user, display at a specific location of the second region a setting field of the setting contents including the error in the process corresponding to the selected error symbol.

2. The information processing apparatus according to Claim 1, wherein the processor is configured to, if the process having the setting contents including the error includes a plurality of sub-processes and the specific information on the process displayed in the first region and having the setting contents including the error is selected by the user, display, in the first region, specific information on each sub-process forming the process corresponding to the selected specific information and display specific information on a sub-process having setting contents including the error, in a manner such that the specific information on the sub-process having setting contents including the error is associated with the error symbol.

3. The information processing apparatus according to Claim 2, wherein the processor is configured to display contents of the error if the error symbol corresponding to the sub-process having the setting contents including the error is moused over by the user.

4. The information processing apparatus according to Claim 2, wherein the processor is configured to, if the error symbol corresponding to the sub-process having setting contents including the error is selected by the user, display, at a specific location of the second region, a setting field of the setting contents including the error in the sub-process corresponding to the selected error symbol.

5. The information processing apparatus according to Claim 2, wherein the processor is configured to display the error symbol at and in association with a setting field of the setting contents including the error and displayed in the second region.

6. The information processing apparatus according to Claim 1, wherein the processor is configured to display the error symbol in a manner such that a number of setting contents including the error in the process having the setting contents including the error is clarified.

7. The information processing apparatus according to Claim 6, wherein the error symbol represents, by using a numeral, the number of setting contents including the error in the process.

8. The information processing apparatus according to Claim 6, wherein the processor is configured to display the error symbols by the number of setting contents including the errors in the process in a manner such that the error symbols are associated with the specific information on the process having the setting contents including the error.

9. The information processing apparatus according to Claim 8, wherein the processor is configured to, if one of the error symbols is selected by the user, display, at a specific location of the second region, a setting field of the setting contents corresponding to the selected error symbol.

10. The information processing apparatus according to Claim 1, wherein the processor is configured to, if the error symbol is displayed at and in association with the setting field of the setting contents including the error and displayed in the second region, perform control to display the error symbol in a superior-subordinate relationship if the setting contents are in the superior-subordinate relationship.

11. The information processing apparatus according to Claim 10, wherein the processor is configured to perform control such that the error symbol is not displayed at a setting field of the setting contents that are subordinate.

12. The information processing apparatus according to Claim 10, wherein the processor is configured to, if the error symbol displayed at and in association with a setting field of the setting contents that are subordinate is selected by the user, display, at a specific location of the second region, a setting field of the setting contents that are superior and correspond to the subordinate setting contents.

13. A program comprising:
displaying on a same screen a first region displaying a workflow of processes and a second region displaying setting contents in each process forming the workflow;
with an error included in the setting contents of one of the processes, displaying specific information on the process displayed in the first region and having the setting contents including the error, in a manner such that the specific information is associated with an error symbol indicating an inclusion of the error; and
with the error symbol selected by a user, displaying at a specific location of the second region a setting field of the setting contents including the error in the process corresponding to the selected error symbol.

14. An information processing method comprising:
displaying on a same screen a first region displaying a workflow of processes and a second region displaying setting contents in each process forming the workflow;
with an error included in the setting contents of one of the processes, displaying specific information on the process displayed in the first region and having the setting contents including the error, in a manner such that the specific information is associated with an error symbol indicating an inclusion of the error; and
with the error symbol selected by a user, displaying at a specific location of the second region a setting field of the setting contents including the error in the process corresponding to the selected error symbol.
